# EUROPÄISCHE PATENTANMELDUNG

(11) **EP 1 512 483 A1**
(43) Veröffentlichungstag der Anmeldung: **09.03.2005**
(21) Anmeldenummer: 04017148.0
(22) Anmeldetag: 20.07.2004
(51) Int. Cl.: B23K 11/24

(54) **Widerstandsschweisssystem**

(30) Priorität: 08.09.2003 DE 10341673
(71) Anmelder: Bosch Rexroth AG, 70184 Stuttgart (DE)
(72) Erfinder: Götz, Eckhart, 64711 Erbach (DE); Stellwag, Dieter, 64711 Erbach (DE); Müller, Heinz-Ullrich, 64720 Michelstadt (DE); Scholz, Reinhard, 64711 Erbach (DE)
(74) Vertreter: Thürer, Andreas

(57) **Zusammenfassung**

Ein Servozangen-Widerstandsschweißsystem wobei die Servozangensteuerung, die Schweißumrichter, die Energieversorgung und die Schweißprozesssteuerung eine bauliche Einheit bilden.

## Beschreibung

Die Erfindung betrifft einen Schweißumrichter zum Widerstandsschweißen.

Widerstandsschweißsysteme sind für die moderne Fertigung unersetzlich und werden öfter mit Robotern kombiniert um Fertigungsstraßen zu automatisieren, z.B. um Komponenten von Autokarosserien zusammen zu schweißen.

Moderne Widerstandsschweißsysteme verwenden Schweißzangen, die mittels Servomotoren, statt Pneumatik betrieben werden. Damit kann eine höhere Genauigkeit der Positionierung (Lageregelung) und ein schnellerer Aufbau der Presskraft erreicht werden. Im Vergleich zu einem Pneumatiksystem benötigt eine Servozange jedoch ein komplexeres Ansteuerungssystem. Dieses Widerstandsschweißsystem besteht in der Regel aus Netzteile, einem Schweißumrichter, einem Schweißtransformator, einer oder mehreren Servoschweißzange(n), einer oder mehreren Servozangensteuerung(en) und einer Schweißsteuerung. Unter Servozangensteuerung versteht man den Antriebsumrichter und das Servomotorsteuersystem die benötigt werden, um einer Servomotorbetriebenen Schweißzange (Servoschweißzange) zu steuern.

Der Schweißvorgang wird direkt von der Schweißsteuerung kontrolliert, wobei die Festigkeit der Schweißverbindung im wesentlichen von der Kraft der Servozange und der Güte der Stromregelung abhängt.

Gegenwärtige Systeme, die üblicherweise für Schweißzangen mit Pneumatikantrieb ausgelegt wurden, werden aus einzelnen Komponenten konstruiert und kommen den erhöhten Kommunikationsariforderungen der Servozangen nicht nach, bzw. sind nicht in der Lage alle Vorteile (z.B. Schnelligkeit des Kraftaufbaus) einer Servozange auszunutzen. Während des Schweißprozesses werden auch starke elektromagnetische Felder generiert, die ein Kommunikationssystem mit hoher Bandbreite stören können. Die Qualität des Schweißens kann deswegen schwanken und das System an sich wird nicht optimal ausgenutzt.

Es existieren zwei gängige Systemvarianten. In der ersten Variante sind die zwei zusätzlichen Servoantriebseinheiten, d.h. die Antriebsumrichter, im Roboter eingebaut; Nachteil ist hier die langsame Kommunikation zur externen schweißprozessnahen Schweißsteuerung. In der zweiten Variante sind die beiden Antriebseinheiten in einem zusätzlichen Schaltschrank mit Netz und verschiedenen Kommunikationsschnittstellen untergebracht und mit einer optionalen SPS verbunden. Dieses System besitzt einen Datenaustausch sowohl zum Roboter, als auch zur Schweißsteuerung und ist insgesamt eine aufwendige Lösung.

Der Erfindung liegt die Aufgabe zu Grunde, ein Schweißsystem zum Widerstandsschweißen derart weiter zu entwickeln, dass es einfach aufgebaut ist und eine schnellere Kommunikation zu den Komponenten bietet. Insbesondere soll das System dynamisch optimiert und die Schweißqualität erhöht.

Erfindungsgemäß wird die Aufgabe bei einem Schweißsystem zum Widerstandsschweißen nach den in Anspruch 1 angegebenen Merkmalen gelöst. Ein wesentliches Merkmal der Erfindung ist, dass die Servozangensteuerung, der Schweißumrichter, das Energieversorgungssystem und die Schweißprozesssteuerung eine bauliche Einheit bilden. Die Vorteile sind ein reduzierter Montageaufwand, reduzierte Kosten und eine Reduzierung der Komplexität und Störanfälligkeit des Kommunikationssystems. Die Kommunikation zwischen Servozange, Servozangensteuerung und Schweißsteuerung wird optimiert und die Kommunikation zwischen den Schweiß- und Servozangensteuerungen erfolgt in einem stabilen elektromagnetischen Umfeld, der Verkablungsaufwand wird minimiert oder entfällt, und kann deswegen für den Schweißprozess optimiert werden. Die genannten vorteile sind für einen online real-time-Regelungssystem unerlässlich.

Vorteilhafterweise werden der Schweißumrichter, und die mindestens eine Servozangesteuerung, über ein gemeinsames Netzteil mit Energie versorgt. Diese Systemarchitektur reduziert die Zahl der benötigten Leistungselektronikkomponenten, wie z.B. Gleichrichter, Elko's, Drosseln, auf ein Minimum, weil nur ein Netzteil vorhanden ist. Diese Komponenten sind in der Anschaffung teuer und haben durch ihren Hochtemperaturbetrieb einen kurzen MTBF (Mean Time Between Failures) was letztendlich die MTBF des Systems letztendlich bestimmt. Eine Reduzierung der anfälligen Komponenten resultiert dementsprechend in einer Erhöhung den MTBF.

Einer weiteren Vorteil besteht darin, dass für die Energieversorgung der Logikschaltungen des Schweißumrichters, der Schweißprozesssteuerung und der Servozangensteuerung nur ein Netzteil vorgesehen ist. Diese Systemarchitektur reduziert die Anzahl der benötigten Logikversorgungskomponenten auf ein Minimum, da nur ein Netzteil vorhanden ist.

Noch einer anderen, weiteren Vorteil, wird darin erkannt, dass ein gemeinsames Kühlsystem für die Wärmeabfuhr des Schweißumrichters und der Servozangensteuerung angewendet wird. Dies führt zu einer Vereinfachung der Mechanik und einer Minimierung des Bauvolumens.

Einer weiteren Vorteil besteht darin, dass der Datenaustausch sehr schnell und zuverlässig zwischen den Schweißprozesssteuerungen und der Servozangensteuerung über einen Shared-Memory stattfindet. Die Schweißprozesssteuerung kann alle für die Servozangensteuerung relevanten Daten in Echtzeit verfügbar machen, indem sie die Daten in definierte, der Servozangensteuerung zugängliche, Speicherzellen des Speicherbausteins ablegt.

In einer weiteren Ausführungsform erfolgt der Datenaustausch zwischen der Schweißprozesssteuerung und der Servozangensteuerung über einen schnellen parallelen Bus. Ein schnellem paralleler Daten-Bus ist dann vorteilhaft, wenn die auszutauschenden Datenmengen besonders groß sind, und das Shared-Memory auch eine parallele Busstruktur hat.

Bei einer anderen weiteren vorteilhaften Ausgestaltung wird die Servozangensteuerung direkt über der Schweißprozesssteuerung programmiert. Die Integration auf der Steuerungsebene von beiden Funktionen ermöglicht eine genauere Kontrolle der Servozangenbewegung und des Schweißstrompegels, was zu einer Steigerung der Prozessqualität führt.

Die Erfindung wird nun anhand einer Abbildung näher erläutert:

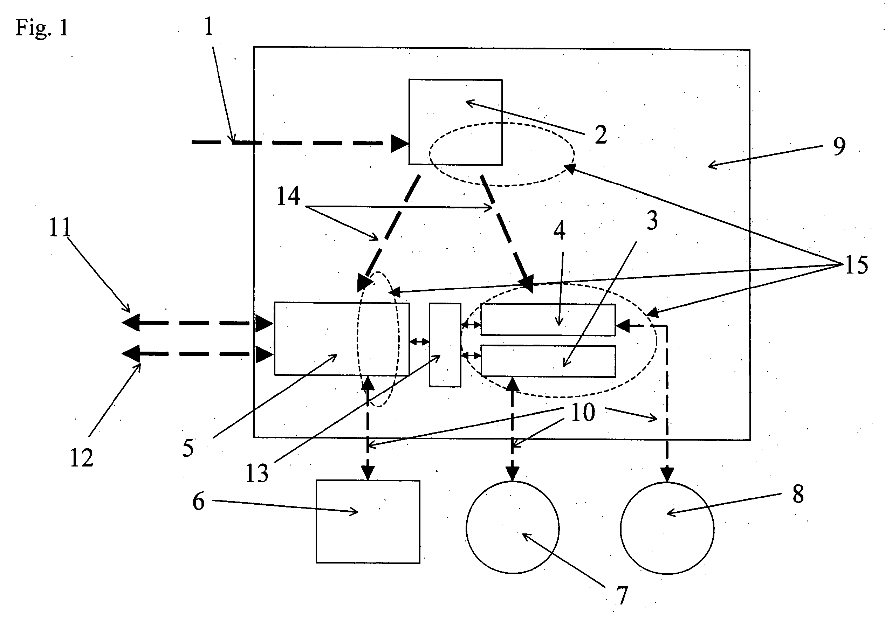

Fig. 1 zeigt ein erfindungsgemäßes Widerstandsschweißsystem 9 das ein zentrales Netzteil 2, eine Schweißsteuerung 5, zwei Antriebseinheiten 3, 4 und ihre zugehörigen Servomotoren 4, 8 aufweist. Den Schweißtransformator 6 steuert die Schweißsteuerung 5, die erfindungsgemäß über einen Shared-Memory 13 mit den zwei Antriebseinheiten 3,4, kommuniziert. Unter Antriebseinheit versteht man die Steuereinheiten, die für die Lage-, Geschwindigkeits- und Stromregelung der Servomotoren sorgen und die zugehörige Leistungselektronik. Die Schweißsteuerung ist direkt über eine Kommunikationsschnittstelle 11 mit einer Robotersteuerung verbunden, die dazu ausgelegt ist, den Schweißablauf und die Zangenbewegung zu steuern. Die Robotersteuerung und die Schweißsteuerung sind in der Regel separate Einheiten, da sie von unterschiedlichen Herstellern kommen; Die Schweißsteuerung 5 und die Antriebseinheiten 3,4 werden über das Netzteil 2 mit Energie und auch einer stabilen, geregelten Logikspannung versorgt. Die Schweißsteuerung 5 umfasst eine Leistungselektronik zur Generierung und eine Steuereinheit zur Regelung des Schweißstromes. Die Antriebseinheiten 3, 4 umfassen je einen Wechselrichter zur Kontrollierung des Motorstromes. Üblicherweise sind die Antriebseinheiten 3,4 auch mit Positionsfeedback und anderen relevanten Messsignalen aus den Motoren 7,8 versorgt.
   Das Netzteil 2 versorgt über einen gemeinsamen Zwischenkreisbus 14 sowohl die Schweißsteuerung 5 als auch die Antriebseinheiten 3,4, die anschließend die Servomotoren 7,8 ansteuern. Dadurch spart man empfindliche, große und teure Komponenten, wie Elektrolytkondensatoren und Drosseln. Die erfindungsgemäße Konstruktion resultiert in einer Minimierung des Bauvolumens und einer Erhöhung der Lebensdauer des Schweißsystems 9. Eine Minimierung des Bauvolumens hat auch den Vorteil, dass das Schweißsystem 9 keinen teuren Platz im Schaltschrank benötigt, oder sogar direkt im Gehäuse eines Roboters montiert werden kann.
   Energiegewinn durch Rückspeisung der Bewegungsenergie der Servomotoren ist auch durch den gemeinsamen Zwischenkreisbus gewährleistet. Brems- oder Bewegungsenergie der Servomotoren kann direkt vom Schweißprozess verbraucht werden, was zu einer Reduzierung der benötigten Bemessungsleistung des Bremswiderstandes führt.

Die Servozange wird, beispielsweise an einem Arm eines Roboters montiert, der von einer Roboter- oder Kinematiksteuerung gesteuert wird. Die Robotersteuerung ist programmiert, die Schweißzange zu einem definierten Ort zu bewegen. Die Schweißsteuerung 5 kann während der Bewegung die für den nächsten Schweißpunkt relevanten Daten berechnen und dementsprechend die ersten Lagesollwerte der einzelnen Schweißzangen-Antriebseinheiten 3,4 generieren und in den Shared-Memory 13 ablegen. Sobald die Servozange bzw. der Roboterarm die Zielposition erreicht hat, wird die Schweißsteuerung 5 von der Robotersteuerung über die Schnittstelle 11 benachrichtigt. Danach kann der Schweißprozess unverzüglich gestartet werden. Sobald der Schweißprozess beendet ist, wird die Robotersteuerung von der Schweißsteuerung darüber informiert und der nächste Schweißpunkt wird angefahren.

Im erfindungsgemäßen Widerstandsschweißsystem 9 wird während des Schweißprozesses der Zustand des Schweißpunktes messtechnisch ständig überwacht. Anhand dieser Messungen wird der Schweißprozess in Echtzeit gesteuert. Das dafür benötigte Messsystem ist Bestandteil eines geschlossenen Regelkreises, dessen Bandbreite und Stabilität von den im System vorhandenen Totzeiten abhängig ist. Aus diesem Grund ist die Optimierung der Datenkommunikation zwischen den Systemkomponenten von höherer Bedeutung, und die erfindungsgemäße Integration der wichtigen Komponenten vorteilhaft.

Die aufgenommenen Messdaten werden in der Schweißsteuerung 5 während des Schweißens verarbeitet und neue Lagesollwerte für die Antriebseinheiten 3,4 generiert und im Shared-Memory 13 abgespeichert. Die Sollwerte werden von den Antriebseinheiten aus dem Shared-Memory gelesen und die benötigten Bewegungen der Servomotoren ausgeführt. Diese Schleife wird im Millisekundentakt wiederholt, bis der Prozess von der Schweißsteuerung beendet wird.

### Bezugszeichenliste

- 1.: Netzspannung
- 2.: Netzteil und Mechanik
- 3.: Zangenkraft-Antriebseinheit
- 4.: Zangenausgleichs-Antriebseinheit
- 5.: Schweißprozesssteuerung und Schweißprozessumrichter
- 6.: Schweißtrafo
- 7.: Zangenkraftmotor
- 8.: Zangenausgleichsmotor
- 9.: Bauliche Einheit
- 10.: Leistungs- und Sensorik-Schnittstellen
- 11.: Roboter-Koinmunikationsschnittstelle
- 12.: Schweißsteuerung und Servozangensteuerung Programmierungsschnittstelle
- 13.: Shared Memory (DPRAM), Schweißsteuerungsbus
- 14.: Zwischenkreisbus
- 15.: Servozangensteuerung

## Patentansprüche

1. Vorrichtung zum Widerstandsschweißen mit einem Schweißsystem, bestehend aus zumindest: einem Energieversorgungssystem, einem Schweißumrichter, einer Schweißprozesssteuerung (5), einer Servoschweißzange und einer Servozangensteuerung (15), **dadurch gekennzeichnet, dass** der Schweißumrichter, die Schweißprozesssteuerung, das Energieversorgungssystem und die Servozangensteuerung (15) eine bauliche Einheit bilden.

2. Vorrichtung nach Anspruch 1, **dadurch gekennzeichnet, dass** ein Energieversorgungssystem (14) des Schweißumrichters auch zur Versorgung mit elektrischer Energie der mindestens einen Servozangensteuerung verwendet wird.

3. Vorrichtung nach Anspruch 2, **dadurch gekennzeichnet, dass** ein Energieversorgungssystem (5) einer Logikschaltung des Schweißumrichters auch zur Energieversorgung der Ansteuerung der Servozangensteuerung und der Schweißprozesssteuerung verwendet wird.

4. Vorrichtung nach Anspruch 3, **dadurch gekennzeichnet, dass** ein für die Kühlung des Schweißumrichters vorgesehenen Kühlsystem auch für die Kühlung der Servozangensteuerung (15) verwendet wird.

5. Vorrichtung nach Anspruch 4, **dadurch gekennzeichnet, dass** der Datenaustausch zwischen der Servozangensteuerung (15) und der Schweißprozesssteuerung über ein Shared-Memory (13) erfolgt.

6. Vorrichtung nach Anspruch 5, **dadurch gekennzeichnet, dass** der Datenaustausch zwischen der Servozangensteuerung und der Schweißprozesssteuerung über einen parallelen Daten-Bus (13) erfolgt.

7. Vorrichtung nach Anspruch 6, **dadurch gekennzeichnet, dass** die Programmierung der Servozangensteuerung (15) über die Schweißprozesssteuerung erfolgt.
